# FASCICULE DE BREVET EUROPEEN

(11) **EP 1 169 920 B1**
(45) Date de publication et mention de la délivrance du brevet: **02.06.2004**
(21) Numéro de dépôt: 01401763.6
(22) Date de dépôt: 02.07.2001
(51) Int. Cl.: A01N 25/20, A01N 53/00

(54) **Procédé de lutte contre les parasites et arthropodes**
Verfahren zur Bekämpfung von Parasiten und Arthropoden
Process to control parasites and arthropodes

(30) Priorité: 06.07.2000 FR 0008824
(43) Date de publication de la demande: 09.01.2002
(73) Titulaire: PRODUITS BERGER, 75116 Paris (FR)
(72) Inventeur: Lehoux, Jannick, 27370 THUIT SIGNOL (FR); Gomez, Corinne, 27400 LOUVIERS (FR)
(74) Mandataire: Rémont, Claude

(56) Documents cités:
- EP-A- 0 120 968
- EP-A- 0 639 331
- WO-A-97/47198
- WO-A-99/63267
- DE-A- 2 449 546
- US-A- 5 843 981
- PATENT ABSTRACTS OF JAPAN vol. 010, no. 350 (C-387), 26 novembre 1986 (1986-11-26) & JP 61 151101 A (SHARP), 9 juillet 1986 (1986-07-09)
- PATENT ABSTRACTS OF JAPAN vol. 9, no. 306 (C-317), 28 décembre 1993 (1993-12-28) & JP 60 142906 A (YOSHIO KATSUTA), 29 juillet 1985 (1985-07-29)
- DATABASE WPI Section Ch, Week 199340 Derwent Publications Ltd., London, GB; Class C03, AN 1993-317354 XP002164061 & JP 05 229909 A (KATSUDA S), 7 septembre 1993 (1993-09-07)

## Description

La présente invention concerne un procédé de lutte contre les parasites et arthropodes, notamment contre les insectes et arachnides, en particulier contre les acariens.

L'art antérieur qui va être décrit est plus spécifiquement destiné à la lutte contre les acariens, mais il est entendu que cette démonstration est de manière générale transposable à la plupart des procédés destinés à la lutte contre la plupart des parasites et arthropodes de l'environnement.

On sait que les produits dérivés du pyrèthre, comme les pyréthrinoïdes, constituent des substances très toxiques pour les espèces à sang froid, tels que parasites et arthropodes et, parmi ces derniers, les insectes et arachnides, tandis qu'elles le sont moins pour l'homme et les espèces à sang chaud.

On connaît des compositions comprenant un composé de la famille des pyréthrinoïdes dans un solvant, le pyréthrinoïde couramment employé étant la perméthrine de formule C₂₁H₂₀Cl₂O₃, ; ces compositions sont en général activées (on dit également "synergisées") au moyen d'un produit activateur (ou "synergisant") comme le butoxyde de piperonyle (PBO).

On connaît également, notamment des documents US 5,843,981, DE 24 49 546, JP 60 142906, EP 0 639 331 A, JP 05 229909 et WO 97/47198, des compositions insecticides et/ou parasiticides comprenant un mélange de plusieurs composés de la famille des pyréthrinoides, parmi lesquels la tétraméthrine et la perméthrine.

A ce jour, les méthodes employées pour lutter contre les acariens sont multiples.

On emploie ainsi des shampooings détacheurs de moquettes et/ou des peintures dites anti-acariens qui contiennent lesdites compositions.

Les études montrent que, par application des shampooings, même par un soigneux brossage, seule une partie des acariens est détruite. D'autre part, ces méthodes ne permettent pas d'assurer le traitement complet d'une pièce.

En complément de ces traitements et pour optimiser la destruction des acariens d'une pièce, on peut diffuser les compositions à base de perméthrine et de PBO au moyen d'un pulvérisateur ou d'un aérosol.

Si l'emploi d'un pulvérisateur ou d'un aérosol permet le traitement local de surfaces souillées par des acariens, il ne constitue en aucun cas un moyen efficace pour éradiquer l'ensemble des acariens présents dans une pièce.

En effet, et même dans l'hypothèse optimiste où l'utilisateur aurait pulvérisé, de façon exhaustive, les compositions actuelles sur l'ensemble des surfaces, il reste toutefois une proportion non négligeable d'acariens, non pas en surface, mais à l'intérieur de certaines matières, comme les matelas, les moquettes,... ; ces acariens, qui ne peuvent être décimés par les opérations de traitement par contact décrites ci-dessus, pourront de nouveau se développer et proliférer.

L'utilisation d'aérosol à décharge unique constitue, à l'heure actuelle, le traitement le plus adapté pour lutter contre les acariens présents dans les pièces d'habitation, aussi bien au niveau des surfaces, qu'à l'intérieur de certaines matières, comme les matelas, les moquettes,...

Ce type d'aérosol, calibré en fonction du volume de la pièce à traiter, est destiné à abaisser au maximum la population d'acariens en un seul traitement.

Il présente cependant l'inconvénient majeur d'être à usage unique. En effet, après leur ouverture, de telles bombes diffusent la composition active contre les acariens, dite composition acaricide, jusqu'à vidange complète de leur contenu.

Aussi, et pour traiter de façon optimale un lieu d'habitation par exemple, il y a lieu de procéder à l'achat d'au moins autant d'aérosols à décharge unique que de pièces composant l'habitation, le traitement des parties communes restant posé.

Ces aérosols à décharge unique présentent également l'inconvénient majeur d'interdire l'accès de la pièce traitée pendant les quelques heures qui suivent les opérations de traitement terminées, en raison du caractère agressif et irritant, voire toxique, du produit actif présent dans les proportions obtenues dans l'atmosphère de cette pièce.

JP 61 151101 et EP 0 120 968 décrivent également des procédés de diffusion, dans l'air, de compositions insecticides comprenant un composé de la famille des pyréthrinoïdes.

L'ensemble des procédés de lutte au moyen de compositions acaricides décrits ci-dessus, nécessitent par ailleurs l'emploi de compositions dont les concentrations en perméthrine, produit actif relativement coûteux, sont comprises entre 1 à 3% en poids.

De plus, il est de pratique courante d'activer la perméthrine par l'emploi d'une quantité pondérale triple de PBO, ce qui augmente les coûts de fabrication de telles compositions et donc des dispositifs de diffusion associés.

En outre, les procédés connus sont des procédés agissant par contact direct des produits actifs à l'état liquide, soit par contact immédiat dans le cas d'un shampooing, soit par contact plus ou moins différé dans le cas d'un pulvérisateur ou d'un aérosol, qu'il soit ou non à décharge unique. Ces procédés libèrent soit des gouttelettes plus ou moins fines retombant rapidement sur les surfaces, soit un brouillard constitué de gouttelettes plus fines qui restent en suspension plus longtemps mais retombent, dans un délai maximum d'un petit nombre d'heures, sur les surfaces exposées.

La présente invention vise à pallier l'ensemble des inconvénients mentionnés ci-dessus et propose un procédé de lutte contre les parasites et arthropodes, notamment contre les insectes et arachnides, en particulier contre les acariens, ce procédé comprenant une étape de préparation d'une composition comprenant de la perméthrine et de la tétraméthrine et une étape de diffusion de cette composition dans une enceinte à traiter.

Suivant l'invention, le procédé de lutte est tel que la composition comprend de la perméthrine et de la tétraméthrine dans un solvant combustible et l'étape de diffusion est réalisée au moyen d'un brûleur à combustion catalytique en matière céramique poreuse,
ledit brûleur comportant une partie supérieure munie d'une surface supérieure et une partie inférieure munie d'une extrémité inférieure,
la partie inférieure du brûleur comportant une cavité sensiblement axiale ouverte vers le bas, ladite cavité étant adaptée à recevoir une mèche (8) trempant dans la composition et destinée à amener ladite composition au brûleur,
la cavité débouchant à l'extrémité inférieure du brûleur, s'étendant axialement sur une grande partie de la dimension axiale du brûleur et étant séparée par une paroi de la surface supérieure du brûleur,
la partie supérieure du brûleur comportant une zone périphérique annulaire supportant un catalyseur, cette zone périphérique annulaire entourant une zone centrale sans catalyseur formant zone de vaporisation.

Une telle structure de brûleur a notamment été décrite dans le document WO 99/63267 au nom de la Demanderesse.

Ainsi, les molécules à action acaricide sont réparties de façon homogène dans l'ensemble du volume à traiter et agissent sur l'ensemble des zones susceptibles de contenir des colonies d'acariens et ce, dans les moindres recoins.

Ce procédé est à la fois d'un emploi simple et peu contraignant ; il permet notamment à l'utilisateur d'aller et venir dans sa pièce, de disposer librement de son mobilier, même de façon simultanée aux opérations de traitement.

Par ailleurs, la composition acaricide associée au mode de diffusion présente une réelle efficacité en permettant un traitement optimal des volumes ainsi que de leur contenu pour des compositions acaricides ayant une teneur pondérale en produits actifs très inférieure aux concentrations des compositions actuelles.

Cette efficacité se révèle non seulement dans le traitement curatif des volumes, c'est-à-dire pour détruire les colonies d'acariens présentes, mais également dans le traitement préventif des dits volumes, en permettant de limiter à la fois le développement normal des acariens jusqu'au stade d'adulte reproducteur et en détruisant les éventuels acariens réintroduits dans le volume traité depuis l'extérieur (recontamination externe).

L'invention présente donc l'avantage double de n'utiliser que peu de produit actif et de diffuser une composition acaricide ne présentant aucun danger pour la santé de l'utilisateur, par un effet de synergie surprenant entre la composition acaricide et le procédé de diffusion de celle-ci.

L'économie réalisée grâce aux faibles quantités de produit actif employées est encore augmentée par une mise en oeuvre relativement rapide du procédé.

Dans une version intéressante de l'invention, on emploie une proportion comprise entre 0,05 et 0,5% (en poids) environ de perméthrine et une proportion comprise entre 0,05 et 0,5% (en poids) environ de tétraméthrine.

Dans une version avantageuse, on emploie une proportion comprise entre 0,1 et 0,4% (en poids) environ de perméthrine, et une proportion comprise entre 0,1 et 0,4% (en poids) environ de tétraméthrine.

Dans une version préférée, on emploie une proportion sensiblement identique de perméthrine et de tétraméthrine, de préférence égale à 0,2% (en poids) environ.

Les quantités de chacun des pyréthrinoïdes sont très inférieures à celles couramment employées avec les procédés de diffusion connus.

Le procédé selon l'invention engendre beaucoup moins d'effets secondaires pour l'utilisateur et présente un effet toxique bien inférieur à celui des procédés connus.

Selon un mode préféré de l'invention, on emploie une proportion totale de perméthrine et de tétraméthrine comprise entre 0,15 et 0,8% (en poids) environ, de préférence entre 0,2 et 0,6% (en poids) environ.

La quantité totale de pyréthrinoïdes employée dans le cadre de la présente invention est bien inférieure à l'art antérieur, et peut atteindre une réelle efficacité pour des concentrations pondérales cinq fois moindres.

Avantageusement, on diffuse ladite composition au moyen d'un brûleur à combustion catalytique, le solvant étant combustible et étant par exemple de l'alcool isopropylique.

L'invention concerne également l'utilisation, pour la mise en oeuvre du procédé de lutte contre les parasites et arthropodes, notamment contre les insectes et arachnides, en particulier contre les acariens, selon l'invention, d'un flacon à combustion catalytique, adapté à contenir une composition combustible et à recevoir, sur une embase fixée à son goulot, un brûleur à combustion catalytique, le brûleur pouvant présenter une gorge annulaire sensiblement axiale s'étendant depuis la surface supérieure du brûleur et séparant la zone périphérique annulaire supportant le catalyseur de la zone centrale sans catalyseur formant zone de vaporisation, la cavité étant ménagée dans une masse de matière céramique exempte de catalyseur, et/ou un canal pour mettre à l'atmosphère la partie supérieure de la cavité recevant la mèche.

D'autres avantages et particularités de l'invention résulteront de la description qui va suivre, donnée à titre d'exemples non limitatifs et faite en référence aux figures annexées dans lesquelles :
- la figure 1 est une vue schématique en élévation d'un flacon équipé d'un brûleur à combustion catalytique qui peut être utilisé pour la mise en oeuvre du procédé selon la présente invention ;
- la figure 2 est une vue schématique agrandie en coupe axiale du brûleur représenté à la figure 1, dans un mode préférentiel de mise en oeuvre du présent procédé de la présente invention ;
- la figure 3 est une vue semblable à la figure 2 représentant un mode de réalisation d'un support du brûleur de la figure 2 ;
- la figure 4 est une vue semblable à la figure 2 représentant un mode de réalisation d'une embase adaptée à recevoir le support de la figure 3.

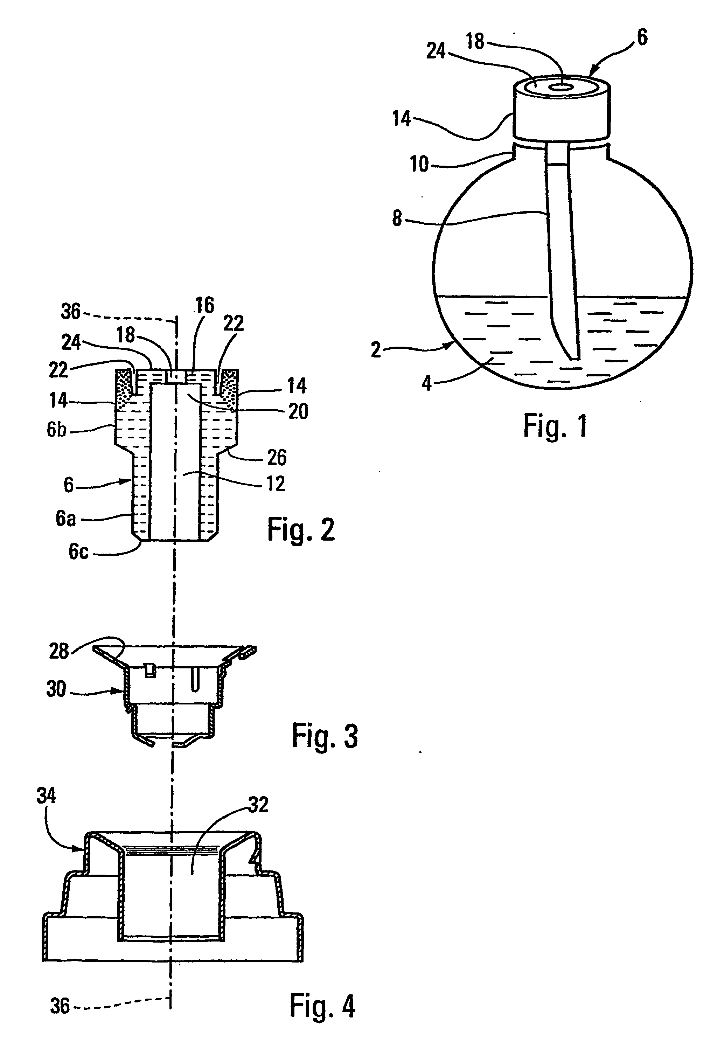

On a représenté à la figure 1 un flacon 2 à combustion catalytique au moyen duquel les essais qui vont être décrits ci-après ont été réalisés.

Ce flacon 2 à combustion catalytique est adapté à contenir une composition combustible 4 et à recevoir à sa partie supérieure un brûleur 6 à combustion catalytique recevant une mèche 8 trempant dans ladite composition 4.

Le flacon 2 peut être un flacon de forme quelconque présentant un goulot 10 sur lequel est adapté le brûleur 6.

La composition combustible 4 comporte de la perméthrine dans un solvant.

Ce solvant appartient habituellement à la famille des alcools, qui est par exemple de l'alcool isopropylique, mais peut également comporter tout autre combustible liquide approprié compatible avec les règlements en vigueur. De préférence, ce combustible liquide doit être tel que sa vaporisation et sa combustion catalytique ne dégagent pas d'odeur désagréable.

L'opération de diffusion est effectuée par vaporisation à chaud du solvant.

La composition combustible 4 selon l'invention peut éventuellement comprendre en outre une matière parfumée.

La mèche 8 est une mèche connue quelconque, par exemple une mèche en coton. La mèche peut également être un mèche en matière minérale, par exemple une mèche en fibres minérales.

Comme représenté en détail à la figure 2, le brûleur 6 à combustion catalytique est un brûleur en matière céramique poreuse, par exemple à base de kaolin.

Le brûleur 6 comporte à sa partie inférieure 6a une cavité 12 sensiblement axiale adaptée à recevoir une mèche 8 destinée à amener au brûleur 6 la composition combustible 4. La cavité 12, qui débouche à l'extrémité inférieure 6c du brûleur 6, s'étend axialement sur une grande partie de la dimension axiale du brûleur 6.

Le brûleur 6 comporte à sa partie supérieure 6b une zone périphérique annulaire 14 supportant un catalyseur, par exemple à base d'un métal appartenant au groupe VIII du tableau de la classification périodique des éléments. La zone périphérique annulaire 14 entoure une zone centrale 16 sans catalyseur formant une zone de vaporisation.

Dans l'exemple représenté à la figure 2, le brûleur 6 comporte dans sa partie supérieure 6b, au moins un canal 18 ouvert, faisant communiquer la partie supérieure 20 de la cavité 12 avec l'atmosphère.

Dans cet exemple et de façon classique, le brûleur 6 présente une gorge annulaire 22 sensiblement axiale s'étendant depuis la surface supérieure 24 du brûleur 6 vers le bas suivant un diamètre supérieur à celui de la cavité 12.

On sait que cette gorge annulaire 22 sépare nettement la zone périphérique annulaire 14 qui supporte le catalyseur, de la zone centrale 16 de la partie supérieure 6b.

Le brûleur 6 présente un épaulement périphérique 26 reçu par un épaulement complémentaire 28 d'un support 30 représenté à la figure 3.

Le support 30 peut être introduit directement à l'intérieur du goulot 10 du flacon 2.

Habituellement, le support 30 est introduit dans le trou central 32 d'une embase 34, comme schématisée à la figure 4, cette embase 34 étant adaptée à être fixée au goulot 10 du flacon 2.

Le support 30 a pour principal effet d'inciter l'utilisateur du brûleur 6 à mettre en place parfaitement le support 30 et le brûleur 6 sur l'embase 34 selon l'axe commun 36 au goulot 10, à l'embase 34, au support 30 et au brûleur 6.

Rien n'interdit d'envisager d'autres structures de flacon associé à un brûleur catalytique ; en particulier, les variantes de flacons décrites dans la demande de brevet internationale WO99/63627 peuvent être avantageusement mises en oeuvre dans le cadre de la présente invention.

L'enceinte d'essais employée dans le cadre de la présente expérimentation répond aux normes actuelles retenues pour le test des aérosols insecticides (AFNOR 72-320/BSI 4172/CEB 135bis), à savoir :
- une pièce parallélépipédique de 30 m³, étanche avec des parois lisses, lavables et inerte vis-à-vis des produits à tester (verre et peinture blanche inerte du type résine de polyuréthanne)
- un sol constitué de matériaux inertes vis-à-vis des produits à tester : faïence blanche.

Cette enceinte est munie des dispositifs suivants :
- un éclairage par tubes fluorescents type lumière du jour donnant environ 1500 lux à 50 cm de la source lumineuse et répartis de manière homogène dans la pièce ;
- une ventilation dynamique optionnelle assurée par un ventilateur permettant le séchage et le renouvellement de l'air . Cette ventilation, totale et automatique, est assurée par un extracteur d'un débit de 1200m³/h. Celle-ci est inactivée pendant les tests ;
- un chauffage et un humidificateur régulés qui permettent de maintenir une température et une humidité relative données pendant la durée des tests.

Pendant les essais les conditions ont été les suivantes : 25 ± 1°C, de 70% ± 5% d'humidité relative, et un éclairage de 1500 lux.

Cette enceinte a par ailleurs été aménagée afin de représenter au mieux une pièce du type habitation, et comporte :
- 3 étagères de 15 cm de large et disposées à 3 hauteurs (20, 100 et 150 cm du sol) ;
- une planche sur pieds représentant une table basse (0,5 m x 1 m) à 80 cm de hauteur;
- une plaque de polystyrène expansé maintenue verticalement dans un coin de la salle et représentant l'emplacement d'une armoire par exemple (1 m de largeur, 15 cm laissés sur les côtés, à 20 cm du sol et à 50 cm du plafond).

Dans le cadre des essais qui vont être rapportés et commentés, trois compositions ont été successivement testées :
. composition I: tétraméthrine + PBO
. composition II : perméthrine + tétraméthrine
. composition III : perméthrine + tétraméthrine + PBO

Chaque composition à tester a été introduite dans un flacon du type de celui représenté à la figure 1 et équipé d'un brûleur à combustion catalytique tel que décrit à la figure 2.

Après un amorçage de la combustion catalytique, le flacon est introduit et déposé au centre de l'enceinte, à une hauteur de 90 cm au dessus du niveau du sol.

La diffusion par combustion catalytique de la composition testée est mise en oeuvre pendant 30 minutes environ après quoi cette diffusion est interrompue.

Deux types de protocoles ont ensuite été conduits, permettant l'évaluation des effets curatif d'une part, et préventif ou résiduel d'autre part, de chacune des compositions.

Pour mesurer l'effet curatif de chaque composition, on introduit dans l'enceinte, et au terme des 30 minutes de diffusion de la composition testée, 100 acariens. On mesure alors ensuite à intervalle régulier le nombre d'acariens morts, déterminant ainsi le taux de mortalité associé.

Pour mesurer l'effet préventif ou résiduel, une surface de moquette, qui a été introduite au terme des 30 minutes de diffusion de la composition testée et a donc subi le traitement en vue de l'évaluation de l'effet curatif, est retirée de l'enceinte, 8 jours après l'arrêt de la diffusion par combustion catalytique de la composition testée. La surface de moquette est de nouveau réintroduite dans l'enceinte après avoir au préalable été infestée par un nombre déterminé de nouveaux acariens dont la mortalité est ensuite suivie par intervalles réguliers de 24 heures.

Ces essais ont été réalisés avec des acariens *Dermatophagoïdes pteronysssinus* fournis par le Laboratoire des Insectes et Acariens des Denrées de l'Institut National de la Recherche Agronomique (INRA) de Bordeaux.

Pour chaque composition testée, trois répétitions de traitement ont été effectuées.

Par ailleurs, en parallèle de chacun des essais, des lots témoins ont subi les mêmes manipulations.

Les résultats des essais sont donnés ci-dessous, pour chacune des compositions testées :

### Composition I

La composition I est réalisée en associant 0,4% en poids de tétraméthrine avec 1,16% en poids de butoxyde de piperonyle (PBO), le reste étant de l'alcool isopropylique.

Les résultats obtenus sont les suivants :

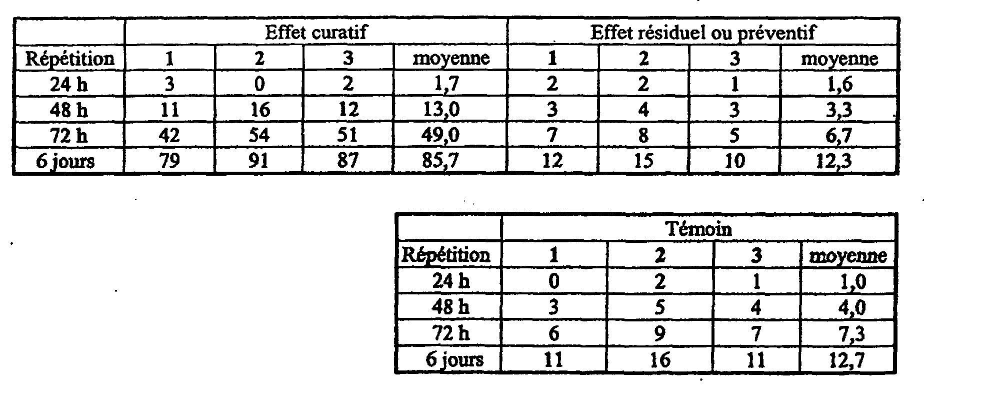

### Composition II

La composition II est réalisée en associant des quantités identiques de tétraméthrine et de perméthrine, soit 0,2% en poids de chacun de ces produits, le reste étant de l'alcool isopropylique.

Les résultats obtenus sont les suivante :

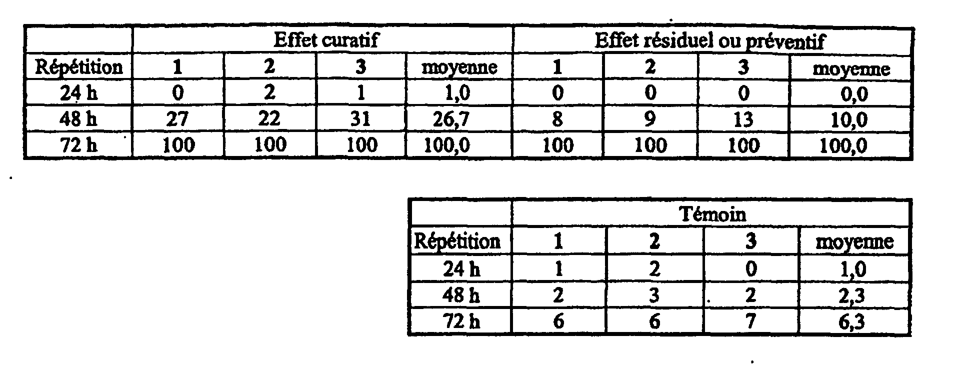

### Composition III

La composition III est réalisée en associant 0,4% en poids de tétraméthrine, 0,2% en poids de perméthrine et 1,16% en poids d'un activateur, en l'espèce du butoxyde de piperonyle (PBO), le reste étant de l'alcool isopropylique.

Les résultats obtenus sont les suivants :

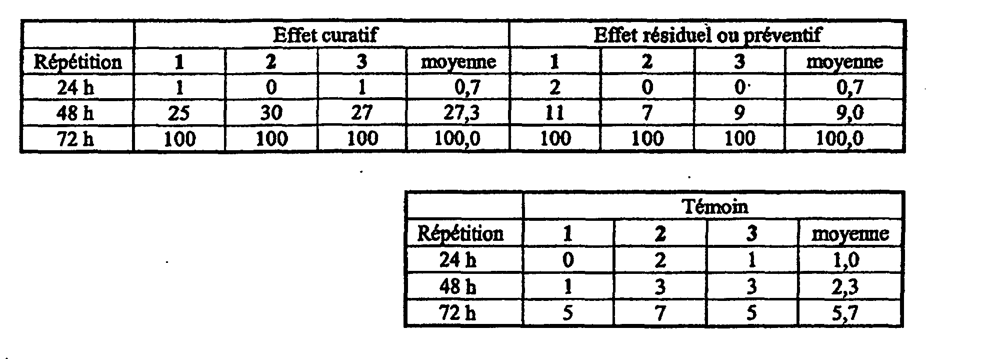

Les données chiffrées indiquent la proportion d'acariens morts relevée pour chaque répétition numérotée de 1 à 3, après respectivement 24, 48, puis 72 heures et éventuellement après 6 jours, et ce :
- après l'arrêt de la diffusion de la composition considérée pendant une durée de 30 minutes pour la mesure de l'effet curatif, et
- après une période de 8 jours après l'arrêt de la diffusion de la composition considérée pour la mesure de l'effet résiduel ou préventif.

Pour toutes les répétitions réalisées, les lots témoins ainsi que les tests dits "inter-essais" (réalisés dans le but de vérifier que l'enceinte ne subit pas de recontamination extérieure), ont présenté des taux de mortalité faibles, voire nuls. Par ailleurs, les données chiffrées sont très homogènes d'une répétition sur l'autre. En conséquence, ceci autorise l'interprétation des résultats en l'état.

La tétraméthrine, composé de formule C₁₉H₂₅O₄ appartenant comme la perméthrine à la famille des pyréthrinoïdes, est connue comme agent d'abattement contre la plupart des insectes volants ou rampants.

Les résultats obtenus avec la composition I, associant la tétraméthrine avec du butoxyde de piperonyle, sont médiocres : l'effet curatif obtenu n'est que de 49% au bout de 3 jours après l'arrêt de la diffusion de la composition, et de 86% au terme de 6 jours. Le taux de mortalité n'atteint pas les 100% après l'arrêt de la diffusion de la composition. L'effet résiduel ou préventif est également médiocre.

On constate donc que, bien que synergisée, la tétraméthrine ne s'impose pas comme un produit efficace pour lutter contre les acariens.

Or, il a cependant été constaté de façon surprenante que la tétraméthrine, associée à de la perméthrine et du PBO, donne d'excellents résultats, dans la lutte aussi bien curative que préventive.

En effet, les essais réalisés avec la composition II ont montré une efficacité remarquable du procédé selon l'invention pour une diffusion par combustion catalytique d'une telle composition, puisque, 3 jours après la diffusion de chacune de ces compositions, les données expérimentales indiquent que tous les acariens, introduits après ladite diffusion, sont détruits, de même que ceux réintroduits 8 heures après cette même diffusion.

De plus, les résultats s'avèrent particulièrement surprenants si l'on compare les données obtenues avec chacune des compositions II et III.

La composition II qui, d'une part ne comporte pas de synergisant du type PBO (molécule pourtant très couramment employée pour activer la perméthrine), et d'autre part comporte une quantité de tétraméthrine réduite de moitié par rapport à la quantité de tétraméthrine utilisée dans la composition III, donne d'excellents résultats.

Dans l'enceinte précitée d'un volume de 30 m³, un effet curatif de 100% est atteint en moins de 72 heures ; l'effet préventif ou résiduel a été observé sur une période de 8 jours, avec une diffusion d'une quantité totale comprise entre 40 à 70 mg de perméthrine et tétraméthrine.

On peut donc considérer que la diffusion d'une quantité totale comprise entre 1,33 et 2,33 mg/m³ de perméthrine et de tétraméthrine permet un traitement efficace pendant 8 jours.

Plus généralement, pour le traitement efficace d'une enceinte pendant 8 jours, la quantité totale de perméthrine et de tétraméthrine diffusée est comprise entre 0,5 et 3 mg/m³, avantageusement comprise entre 1 et 2,5 mg/m³ et de préférence comprise entre 1,5 et 2 mg/m³.

Les résultats obtenus avec la diffusion de cette composition II démontrent par ailleurs l'inutilité de l'addition de synergisant du type PBO dans ce type de compositions acaricides, qui présentent donc un intérêt industriel très marqué.

Au contraire, ces résultats mettent en évidence l'existence d'une réelle synergie entre la perméthrine et la tétraméthrine.

On constate donc que la diffusion, par combustion catalytique, de compositions associant notamment la perméthrine et la tétraméthrine dans de très faibles proportions pondérales, de loin inférieures aux compositions couramment employées dans la lutte contre les acariens, assure une diffusion fine et optimale des dites compositions, permettant non seulement un traitement curatif des volumes, mais également une rémanence de ce traitement dans le temps, mesurée par l'effet résiduel ou préventif.

Les acariens sont par ailleurs considérés comme beaucoup plus résistants que les insectes, notamment les mouches.

Le procédé selon l'invention est donc également recommandé pour détruire les mouches et autres insectes ou parasites.

On suppose que c'est la diffusion particulièrement fine de la composition, associant la perméthrine et la tétraméthrine, qui donne ce résultat surprenant.

Bien entendu, la présente invention n'est pas limitée aux modes de réalisation que l'on vient de décrire et on peut apporter à ceux-ci de nombreux changements et modifications sans sortir du domaine de l'invention.

## Revendications

1. Procédé de lutte contre les parasites et arthropodes, notamment contre les insectes et arachnides, en particulier contre les acariens, ce procédé comprenant une étape de préparation d'une composition (4) comprenant de la perméthrine et de la tétraméthrine et une étape de diffusion de cette composition (4) dans une enceinte à traiter,
**caractérisé en ce que** la composition comprend de la perméthrine et de la tétraméthrine dans un solvant combustible et **en ce que** l'étape de diffusion est réalisée au moyen d'un brûleur (6) à combustion catalytique en matière céramique poreuse,
ledit brûleur (6) comportant une partie supérieure (6b) munie d'une surface supérieure (24) et une partie inférieure (6a) munie d'une extrémité inférieure (6c),
la partie inférieure (6a) du brûleur (6) comportant une cavité (12) sensiblement axiale ouverte vers le bas, ladite cavité (12) étant adaptée à recevoir une mèche (8) trempant dans la composition (4) et destinée à amener ladite composition (4) au brûleur (6),
la cavité (12) débouchant à l'extrémité inférieure (6c) du brûleur (6), s'étendant axialement sur une grande partie de la dimension axiale du brûleur (6) et étant séparée par une paroi de la surface supérieure (24) du brûleur (6),
la partie supérieure (6b) du brûleur (6) comportant une zone périphérique (14) annulaire supportant un catalyseur, cette zone périphérique (14) annulaire entourant une zone centrale (16) sans catalyseur formant une zone de vaporisation.

2. Procédé selon la revendication 1, **caractérisé en ce que** l'on emploie une proportion comprise entre 0,05 et 0,5% (en poids) environ, de préférence comprise entre 0,1 et 0,4% (en poids) environ, de perméthrine et une proportion comprise entre 0,05 et 0,5% (en poids) environ, de préférence comprise entre 0,1 et 0,4% (en poids) environ, de tétraméthrine.

3. Procédé selon la revendication 1 ou 2, **caractérisé en ce que** l'on emploie une proportion sensiblement identique de perméthrine et de tétraméthrine, de préférence égale à 0,2% (en poids) environ.

4. Procédé selon l'une des revendications 1 à 3, **caractérisé en ce que** l'on emploie une proportion totale de perméthrine et de tétraméthrine comprise entre 0,15 et 0,8% (en poids) environ, de préférence entre 0,2 et 0, 6% (en poids) environ.

5. Procédé selon l'une des revendications 1 à 4, **caractérisé en ce que**, pour le traitement efficace d'une enceinte pendant 8 jours, on diffuse une quantité totale de perméthrine et de tétraméthrine comprise entre 0,5 et 3 mg/m³, avantageusement comprise entre 1 et 2,5 mg/m³ et de préférence comprise entre 1,5 et 2 mg/m³.

6. Procédé selon l'une des revendications 1 à 5, **caractérisé en ce que** la composition comprend en outre un activateur, tel que du butoxyde de piperonyle (PBO).

7. Utilisation, pour la mise en oeuvre du procédé de lutte contre les parasites et arthropodes, notamment contre les insectes et arachnides, en particulier contre les acariens, selon l'une quelconque des revendications précédentes, d'un flacon (2) à combustion catalytique, adapté à contenir une composition combustible (4) et à recevoir, sur une embase (34) fixée à son goulot (10), un brûleur (6) à combustion catalytique, ledit brûleur (6) pouvant présenter une gorge annulaire (22) sensiblement axiale s'étendant depuis la surface supérieure (24) du brûleur (6) et séparant la zone périphérique (14) annulaire supportant le catalyseur de la zone centrale (16) sans catalyseur formant une zone de vaporisation et/ou un canal (18) pour mettre à l'atmosphère la partie supérieure (20) de la cavité (12) recevant la mèche (8).

## Patentansprüche

1. Verfahren zur Bekämpfung von Parasiten und Arthropoden, besonders von Insekten und Arachniden, insbesondere von Milben, wobei das Verfahren umfasst: einen Schritt der Herstellung einer Zusammensetzung (4) mit Permethrin und Tetramethrin und einen Schritt der Diffusion dieser Zusammensetzung (4) in einem zu behandelnden Raum,
**dadurch gekennzeichnet, dass** die Zusammensetzung Permethrin und Tetramethrin in einem brennbaren Lösungsmittel enthält und dass der Diffusionsschritt mit Hilfe eines Brenners (6) zur katalytischen Verbrennung in keramischen porösen Material durchgeführt wird,
wobei der Brenner (6) einen oberen Abschnitt (6b), ausgestattet mit einer oberen Fläche (24), und einen unteren Abschnitt (6a), ausgestattet mit einem unteren Ende (6c), aufweist,
wobei der untere Abschnitt (6a) des Brenners (6) einen Hohlraum (12) aufweist, welcher im Wesentlichen axial nach unten offen ist, wobei der Hohlraum (12) einen Docht (8) aufnehmen kann, der in die Zusammensetzung (4) eingetaucht und dazu bestimmt ist, die Zusammensetzung (4) zu dem Brenner (6) zu führen,
wobei der Hohlraum (12), der in dem unteren Ende (6c) des Brenners (6) mündet, sich axial über einen großen Teil der axialen Ausdehnung des Brenners (6) erstreckt und durch eine Trennwand der oberen Fläche (24) des Brenners (6) abgetrennt ist,
wobei der obere Abschnitt (6b) des Brenners (6) eine periphere ringförmige Zone (14) aufweist, die einen Katalysator trägt, wobei die periphere ringförmige Zone (14) eine zentrale Zone (16) ohne Katalysator umgibt, die eine Verdampfungszone bildet.

2. Verfahren nach Anspruch 1, **dadurch gekennzeichnet, dass** ein Anteil etwa zwischen 0,05 und 0,5 Gew.-%, bevorzugt etwa zwischen 0,1 und 0,4 Gew.-% Permethrin und ein Anteil etwa zwischen 0,05 und 0,5 Gew.-%, bevorzugt etwa zwischen 0,1 und 0,4 Gew.-% Tetramethrin verwendet wird.

3. Verfahren nach Anspruch 1 oder 2, **dadurch gekennzeichnet, dass** ein im Wesentlichen identischer Anteil von Permethrin und Tetramethrin, bevorzugt etwa 0,2 Gew.-%, verwendet wird.

4. Verfahren nach einem der Ansprüche 1 bis 3, **dadurch gekennzeichnet, dass** ein Gesamtanteil von Permethrin und Tetramethrin etwa zwischen 0,15 und 0,8 Gew.-%, bevorzugt etwa zwischen 0,5 und 0,6 Gew.-% verwendet wird.

5. Verfahren nach einem der Ansprüche 1 bis 4, **dadurch gekennzeichnet, dass** für die wirksame Behandlung eines Raums über 8 Tage hinweg eine Gesamtmenge von Permethrin und Tetramethrin zwischen 0,5 und 3 mg/m³, vorteilhafter zwischen 1 und 2,5 mg/m³ und bevorzugt zwischen 1,5 und 2 mg/m³ verteilt wird.

6. Verfahren nach einem der Ansprüche 1 bis 5, **dadurch gekennzeichnet, dass** die Zusammensetzung außerdem einen Aktivator, wie z.B. Piperonylbutoxid (PBO), umfasst.

7. Verwendung eines Fläschchens (2) zur katalytischen Verbrennung für die Anwendung des Verfahrens zur Bekämpfung von Parasiten und Arthropoden, besonders von Insekten und Arachniden, insbesondere von Milben, nach einem der vorhergehenden Ansprüche, wobei das Fläschchen eine brennbare Zusammensetzung (4) enthalten kann und über eine an seinem Flaschenhals (10) befestigte Steckverbindung (34), einen Brenner (6) zur katalytischen Verbrennung aufnehmen kann, wobei der Brenner (6) eine ringförmige im Wesentlichen axiale Vertiefung (22) aufweist, die sich von der oberen Fläche (24) des Brenners (6) erstreckt, und die die ringförmige periphere Zone (14), die den Katalysator trägt, von der zentralen Zone (16) ohne Katalysator trennt, die eine Verdampfungszone und/oder einen Kanal (18) bildet, um den oberen Abschnitt (20) der Vertiefung (12), die den Docht (8) aufnimmt, mit der Umgebung in Kontakt zu bringen.

## Claims

1. Process to control parasites and arthropods, in particular insects and arachnids, especially against acarides, this process including a step of preparation of a composition (4) comprising permethrin and tetramethrin and a step of diffusion of this composition (4) in an enclosed space to be treated,
**characterised in that** the composition contains permethrin and tetramethrin in a combustible solvent and **in that** the diffusion step is realised by means of a catalytic combustion burner (6) made from porous ceramic material,
said burner (6) including an upper part (6b) equipped with an upper surface (24) and a lower part (6a) equipped with a lower extremity (6c),
the lower part (6a) of the burner (6) containing a cavity (12) which is approximately axial, open towards the base, said cavity (12) being adapted to receive a wick (8) soaking in the composition (4) and intended to conduct said composition (4) to the burner (6),
the cavity (12) opening out at the lower extremity (6c) of the burner (6), extending axially over a large part of the axial dimension of the burner (6) and being separated by a wall from the upper surface (24) of the burner (6),
the upper part (6b) of the burner (6) comprising an annular peripheral zone (14) supporting a catalyser, this annular peripheral zone (14) surrounding a central zone (16) without catalyser forming a vaporisation zone.

2. Process according to claim 1, **characterised in that** it uses a proportion of between 0.05 and 0.5% (by weight) approximately, preferably between 0.1 and 0.4% (by weight) approximately, of permethrin and a proportion of between 0.05 and 0.5% (by weight) approximately, preferably between 0.1 and 0.4% (by weight) approximately, of tetramethrin.

3. Process according to claim 1 or 2, **characterised in that** an approximately identical proportion of permethrin and of tetramethrin is used, preferably equal to approximately 0.2% (by weight).

4. Process according to one of claims 1 to 3, **characterised in that** a total proportion of permethrin and tetramethrin of between 0.15 and 0.8% (by weight) approximately is used, preferably between 0.2 and 0.6% (by weight) approximately.

5. Process according to one of claims 1 to 4, **characterised in that** for the effective treatment of an enclosed space for 8 days, a total quantity of permethrin and tetramethrin of between 0.5 and 3 mg/m³ is diffused, advantageously between 1 and 2.5 mg/m³ and preferably between 1.5 and 2 mg/m³.

6. Process according to one of claims 1 to 5, **characterised in that** the composition also includes an activator, such as piperonyl butoxide (PBO).

7. Utilisation, for the implementation of the process to control parasites and arthropods, in particular insects and arachnids, especially against acarides, according to any one of the preceding claims, of a catalytic combustion flask (2), adapted to contain a combustible composition (4) and to receive, on a shoulder (34) attached to its neck (10), a catalytic combustion burner (6), said burner (6) displaying an approximately axial annular throat (22) extending from the upper surface (24) of the burner (6) and separating the annular peripheral zone (14) supporting the catalyser from the central zone (16) without catalyser, which forms a vaporisation zone, and/or a channel (18) to expose the upper part (20) of the cavity (12) receiving the wick (8) to the atmosphere.
